# EUROPEAN PATENT SPECIFICATION

(11) **EP 3 091 267 B1**
(45) Date of publication and mention of the grant of the patent: **27.05.2020**
(21) Application number: 15166266.5
(22) Date of filing: 04.05.2015
(51) Int. Cl.: F16L 59/18, F01N 13/18, F16L 27/10, F16L 27/111, F16L 51/02, F01N 13/16

(54) **FLEXIBLE CONDUIT ELEMENT**
FLEXIBLES LEITUNGSELEMENT
ÉLÉMENT DE CONDUITE FLEXIBLE

(43) Date of publication of application: 09.11.2016
(73) Proprietor: Sjm Co., Ltd., Kyungki Province 425-100 (KR)
(72) Inventor: Lee, Jae Kwang, 68163 Mannheim (DE); Webel, Uwe, 76877 Offenbach (DE); Choi, Young Hwan, Incheon City (DE)
(74) Representative: Grünecker Patent- und Rechtsanwälte PartG mbB

(56) References cited:
- EP-A1- 2 450 546
- EP-A1- 2 730 765
- WO-A2-2008/066946
- US-A1- 2011 314 780

## Description

The present invention relates to a flexible conduit element of an exhaust gas system for vehicles having combustion engines, comprising a bellows member defining a guiding channel guiding the exhaust gas of an inlet opening of the channel to an outlet opening thereof.

Further, the present invention relates to an exhaust gas system comprising the flexible conduit element with said insulation means.

A flexible conduit element of the above-mentioned kind is known, for example, from EP 19 08 936 A1. Such a flexible conduit element is usable in a pipe system, such as vehicular exhaust system, to provide a flexible joint between two exhaust gas pipes. They are commonly placed within the exhaust gas system of a combustion engine vehicle. The flexible conduit element can be mounted between the exhaust pipe, leading from the engine to a muffler, and the exhaust gas opening of a combustion engine. The flexible conduit element serves as a decoupler joint in the exhaust gas system, and is exposed to heat and vibrations, as well as impact loads, which are caused by vibration of the engine and engine roll when starting the engine during acceleration and braking or gear shifting. Also, road conditions may generate vibration at the exhaust pipe. The flexible conduit element should prevent a transfer of the impact loads, vibrations, etc. to the components which are mounted at the flexible conduit element openings, for example, the combustion engine and the exhaust gas pipes.

One problem in such coupling is that the heat of the exhaust gas can heat up the adjacent components of the flexible conduit element like the bellows members and the adjacent fixing elements.

In CA 2 714 750 a conduit exhaust system with a thermal and noise insulation is described, which insulation can be made of a commercially available silica fiber insulation. This thermal insulation is preferably sandwiched between the inside of the conduit for guiding the exhaust gas and the bellows member of the flexible conduit element.

However, this silica-fiber insulation is provided for preventing a heating of adjacent components of the flexible conduit element. Today the purification of the exhaust gas is an important point and is effective when the exhaust gases have a certain high temperature. Thus, it is important to provide an exhaust gas system and a conduit element which can prevent cooling of the exhaust gas.

EP 2 730 765 A1 discloses a pipe element that has an inner pipe portion that is surrounded by an outer pipe portion with a predetermined distance, and designed in a gas-tight manner, such that an intermediate space is formed between the inner and outer pipe portion. The inner pipe portion comprising corrugated tube or bellows that are positioned between a left smooth cylindrical end section and a right smooth-cylindrical end section. An insulating material of basalt rock wool may be provided in the intermediate space.

WO 2008/066946 A2 discloses fire-retardant insulating material and method of construction thereof has a textile fabric fabricated of continuous basalt filaments. The continuous basalt filaments are preferably texturized or twisted. The insulating material may be arranged in any configuration, such as a sheet, panel or sleeve, and may be knit, woven or braided.

EP 2 450 546 A1 discloses a flexible conduit element according to the preamble of independent claim 1.

An object of the invention is therefore to provide a flexible conduit element which can appropriately insulate the exhaust gases but does not pollute the environment and is easy to manufacture.

This object is solved according to the invention by means of a flexible conduit element comprising the features of claim 1.

Advantageously, embodiments can be derived from the subclaims.

According to the invention of an flexible conduit element of exhaust gas systems for vehicles having combustion engines, said flexible conduit element comprises a bellows member defining a guiding channel within the bellows member guiding the exhaust gas of an inlet opening of the channel to an outlet opening thereof, and a thermal insulation means which comprises a basalt material. A thermal isolation means made of basalt material has the following benefits. Basalt material is easy to achieve since, for example, basalt is one of the most common rock types in the world. Further, basalt material is heat resistant and can resist the temperatures which occur in an exhaust gas system for example of a vehicle, like a passenger vehicle, a motor truck, or any vehicle with a combustion engine. The basalt material provides isolated products surrounding the guided exhaust gases such that these gases at least maintain their temperature such that a purifying of the exhaust gas in subsequent exhaust gas purification is simplified. The purification of exhaust gas in a catalytic converter should to be performed with a certain temperature of the exhaust gas to be effective. When the exhaust gas temperature decreases to a certain degree the exhaust gas needs to be reheated.

According to the invention of the flexible conduit element, the insulation means is a composite mesh made of fibers made of basalt and fibers made of metal which are braided or woven in each other, and is also a flexible member for protecting and regulating the dynamic stiffness of the flexible conduit element and located on the outside of the bellows member.

According to another embodiment of the flexible conduit element the basalt material is provided as a fiber which is drawn out of a melted basalt material. A fiber of basalt has similar tensile strength as carbon fiber but is easier and less expensive to produce than carbon fibers. Additionally, the basalt fibers have a high elastic module, resulting in said excellent specific tensile strength, which elastic module is three times that of steel.
The manufacturing process of fibers from volcanic material will be explained on the example of basalt based fibers. First, the basalt stone should be quarried to a predetermined size. Then the quarried basalt rocks are transferred to a furnace to be melted by a temperature at about 1,400 °C (2,550 °F). The molten basalt rock can be extruded through small nozzles, in particular spinnerets, to produce continuous filaments of basalt fiber which can be wound to a roving. There are three main manufacturing techniques for manufacturing fibers of filament of basalt, which are centrifugal-blowing, centrifugal-multiroll and die-blowing. The fibers typically have a filament diameter of between 9 and 13 µm which is far enough above the respiratory limit of 5 µm to make basalt fiber a suitable replacement for example of asbestos, and other fibers below the respiratory limit.

According to the embodiment of the flexible conduit element, the composite mesh provides the advantages of flexible and elastic properties. Further, the composite mesh can be configured such that there are recesses or air pockets. The surrounding air has at normal conditions a very low thermal conductivity λ of about 0.0261 W/ (m*K). In this regard the term matrix should be understood as a texture, layer, support or jacket, which can be in some embodiments a carrier for other materials. Preferably the corrugations and / or undulations of the bellows member are covered by the braided and / or woven fabric made of basalt fibers or filaments, such that the undulations and / or corrugations of the bellows member are covered by the fabric matrix of basalt. This has the advantage that the air can be contained in these air pockets or in air layers to isolate the bellows member such that the temperature of the exhaust gas can be maintained so that a later purification of the same needs no further reheating of the exhaust gases, guided through the flexible conduit member. Thus, the thermal exchange between the environment and the exhaust can be minimized, such that there is less thermal energy loss. Advantageously, the exhaust gas having the amount of heat Q_{In} exits the conduit element with nearly the same amount of heat Q_{Out}, such that Q_{In}≈Q_{Out}.

According to another embodiment of the flexible conduit element the braided and / or woven matrix, defines recesses and / or loops. In this regard recesses means grooves, pockets and / or through holes. A loop defines a recess or through-hole.

According to a further embodiment of the flexible conduit element the insulation means is flexible relative to and movable attached at the bellows member in a floating manner and / or comprises flexible recesses in its outer surface for improving the flexibility and thermal insulation of the insulation means. In this regard, floating manner should be understand that the insulation means is flexible and movable positioned at a whole and or / at predetermined positions around, in and / or within the flexible conduit element such that the insulation means element does not disturb the functions of the flexible conduit element as a movable coupling element between a combustion engine and an exhaust gas system.

According to another embodiment of the flexible conduit element, the braided matrix is at least partially covered at one side by a fire resistant layer, which covers the recesses. A further layer may be provided having a more or less air tight matrix or texture such that the air in a covered recess is held in place by the additional layer. The additional layer can be a second insulation means or just a layer for covering the recesses, like a flexible outer hose of metal, to reduce the surface of the conduit element for heat exchange.

According to another embodiment of the flexible conduit element, the basalt material of the insulation covers a component of the flexible conduit element such that air pockets and or air layers are defined. The insulation means provides space for air to enhance the insulation and to reduce the surface over which heat exchange can occur. Basalt and lava-stone, both are materials which can be derived from the nature and which are not as costly as, for example, silica and/or carbon, but resist high temperatures and can isolate the temperature of the guided exhaust gases by defining the air pockets and air layers comprising undisturbed air as an insulation.

According to a further embodiment of the flexible conduit element, the basalt material of the insulation means comprises basalt, comprising 45-55 wt% of SiO2, 2-6 wt% of total alkalis, 0.5-2.0 wt% of TiO2, 5-14 wt% of FeO and 14 wt% or more Al₂O₃.

According to another embodiment of the flexible conduit element, the insulation means is located such that the insulation means is exposed. In this regard, exposed should be understood such that the insulation means is exposed to the environment.

According to a further embodiment of the flexible conduit element, the insulation means replaces components of the flexible conduit element.

According to another embodiment of the flexible conduit element, there is at least one or more than one insulation means provided and / or the insulation means comprises multiple layers.

According to another embodiment of the flexible conduit element, the insulation means is a layer, a sheet or a hose. The insulation means is preferably a layer of a woven or braided texture, wherein the fiber used for the texture is made of a volcanic material like basalt or lava-stone. The insulation means defines together with the components of the flexible conduit element having a generally circular section, air pockets or layers which surround the exhaust gas channel and thus enhance the insulation of the exhaust gas to minimize the loss of heat. The invention will be now described by several embodiments depicted in the following figures. Other and further objects of the invention together with the features of novelty pertinent thereto will be apparent from the following description. The accompanying drawings, which form a part of the specification, are to be read in conjunction therewith in which like reference numbers are used to indicate like or similar parts:
- Fig. 1: is a schematic sectional view of first and second embodiments of the flexible conduit element according to the invention having an insulation means for maintaining the temperature of the exhaust gas guided in a channel formed by the flexible conduit element, wherein different embodiments are respectively shown in the upper and the lower half, divided by the middle axis,
- Fig. 2: is a schematic sectional view of related examples which are not claimed but are nonetheless useful for understanding the invention having a flexible insulating layer, wherein different examples are respectively shown in the upper and the lower half, divided by the middle axis,
- Fig. 3: are further embodiments of the flexible conduit element according to the invention in a schematic sectional view having a flexible insulation means provided at an outside of the flexible conduit element, wherein different embodiments are respectively shown in the upper and the lower half, divided by the middle axis,
- Fig. 4: is another schematic sectional view of other embodiments of the flexible conduit element according to the invention having a flexible insulation means, wherein different embodiments are respectively shown in the upper and the lower half, divided by the middle axis,
- Fig. 5: is a schematic view of a braided matrix of an embodiment of the insulation means,
- Figs. 6A - 6C: are schematic section and plan views of different woven and knitted matrixes of the insulation means,
- Fig. 7A-7C: are schematic section views of the bellow member on the insulation means showing the position of different air pockets and air layers defined by the insulation means and the components of the flexible conduit element,
- Fig. 8: is a schematic view of a thermal energy exchange without the cover of a flexible conduit element by an insulation means.

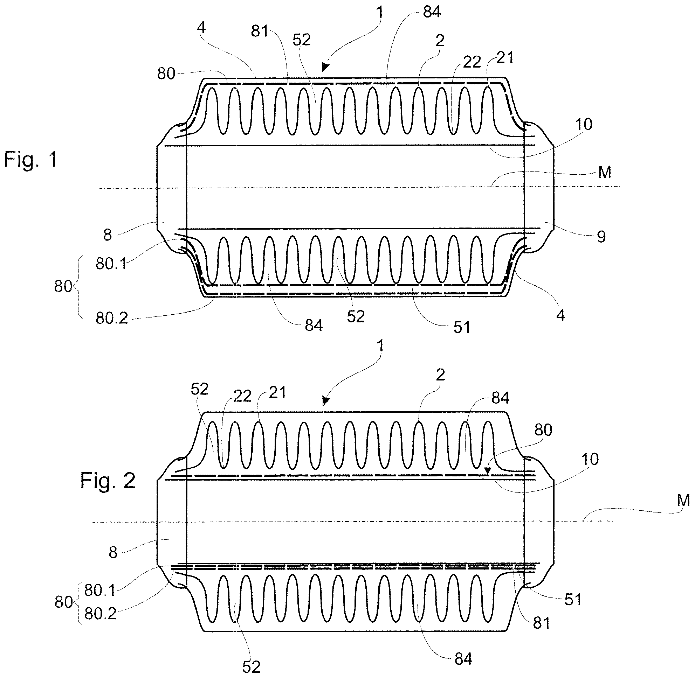

Referring now to the drawings in more detail and initially to Fig. 1, reference sign 1 generally designates a flexible conduit element which is constructed according to an embodiment of the present invention. The flexible conduit element 1 may couple together a pair of pipes not shown via the mounting elements 8, 9, which also are used to stationary fix the further components of the flexible conduit element 1.

The flexible conduit element 1 comprises in the first embodiment a first and second fixing element 8, 9, which are provided at both sides of a channel 10. The channel 10 can be a tubing of the agraffe type which comprises interlocking rings for providing a high flexibility in a translational, torsional and / or bending direction around a middle axis M of the flexible conduit element 1.

Fig. 1 shows in a schematic sectional view a first and a second embodiment of the flexible conduit element 1 according to the invention, wherein an insulation means 80, 80.1, 80.2 is provided at different positions with regard to the bellows member 2.

The upper half and the lower half, which are partitioned by the middle line M, show respectively a first embodiment wherein the insulation means 80 is provided between the bellows member 2 and the flexible member 4.

The second embodiment is shown in the lower half wherein an additional insulation means 80.2 is provided such that a first or inner insulation means 80.1 and a second or outer insulation means 80.2 surround the bellows member 2 for a better insulation. The additional insulation means 80.1, 80.2 are, for example, two hose-like insulation textures made of volcanic fibers which can have the same or different woven, non-woven matrix as the insulation means 80.

Further, the flexible conduit element 1 comprises at its outside a flexible member 4 made of a braided or woven fabric for protecting and regulating the dynamic stiffness of the flexible conduit element 1, and a bellows member 2, comprising corrugations 21 and undulations 22 of constant and/or radial extensions.

The radial extension of the corrugations 21 can increase or may be constant over the length direction of the flexible conduit element 1. Further, the number of corrugations 21 and undulations 22 can be constant or increased depending on the gap between the inlet and outlet pipes to be connected. Additionally, the radial extension of the corrugations 21 and the undulations 22 can be reduced, increased or constant over the length of the flexible conduit element.

The bellows member 2 is in the embodiment shown in Fig. 1 surrounded by both of the flexible members 4 and insulation means 80, which both have a cylindrical hose-like shape.

The flexible element 4, the thermal insulation means 80, the bellows member 2 and the channel 10 are provided at both length sides with the fixing elements 8, 9, which preferably hold the respective end portions of the bellows member 2, the channel 10, and the insulation means 80 in place. The respective fixing elements 8, 9 allow mounting of the flexible conduit element 1 to the associated pipe openings, for example of a combustion engine and an exhaust gas system.

As can be seen in Fig. 1 in the upper half thereof, the insulation means 80 is located on the outer surface of the bellows member 2, which is a flexible and bendable element having sections with frequently positioned corrugations 21 and undulations 22. The corrugations 21 and undulations 22 allow the bellows member 2 to be twisted and flexibly stretched and deformed, such that the vibrations and displacements between an exhaust gas system and a combustion engine are not transferred to the respective end portions such that the connected parts are not harmed by the generated vibrations and displacements.

The insulation means 80, 80.1, 80.2 is preferably made of a heat resistant material, in particular, basalt or lava-stone which is provided in a braided mesh matrix, for example braided to a hose-like insulation means 80, 80.1, 80.2 which can be covered around the bellows member 2. In particular, the insulation means is made of a heat resistant material, like basalt, which also provides as braided matrix a high flexibility in combination with the high heat resistance. The insulation means covers the corrugations of the bellows members 2 and define air pockets 52 and air layer 51. The air contained therein is a perfect insulation.
Additionally, the thermal insulation means 80 can comprise recesses 81 of a predetermined shape and depth, such that the surrounding air can be contained therein to increase the insulation of the insulation means 80. To achieve this, the insulation means 80, 80.1, 80.2 can made of a braided woven matrix of the volcanic material to define pockets or recesses 81, which are defined by the loops and structure of the braided layer or the recesses 81 are cut into a layer of the thermal insulation means 80, 80.1, 80.2.
The braided layer or woven layer of the insulation means 80 may be made of a fiber made of basalt or lava-stone which can be strengthened by incorporating support wires of steel or other heat resistance metals to provide a support matrix for the basalt or lava-stone fibers.
The insulation means 80, 80.1, 80.2 are located between the outer flexible member 4 and the bellows member 2 to insulate and maintain the exhaust gas within the flexible conduit member and also to preferably maintain the temperature of the exhaust gas, such that a purification in a catalysator of the exhaust gas system in a later step can be easily maintained without additional devices for maintaining the temperature of the exhaust gas. In particular, the NOx purification of an exhaust gas should be performed at a relative high temperature Otherwise, the NOx purification will not be performed in an effective manner and the temperature of the exhaust gas must be again heated up to achieve the necessary purification temperature.
As with regard to Fig. 1, Fig. 2 shows a related examples of a flexible conduit element 1 that is not claimed, wherein the upper half and the lower half respectively show a half of an example divided by the middle line M, wherein each of the upper half and the lower half is a half image of the respective part not shown. However, the examples shown in Figs. 1 to 4 can also be provided with the examples shown in the respective other halves, wherein one half has an insulation means 80, 80.1, 80.2 provided at a predetermined position between the tubing of the channel 10 and the bellows member 2 and wherein the other half has an insulation means 80, 80.1, 80.2 between the bellows member 2 and the flexible element 4.
The insulation means 80, 80.1, and / or a second insulation means 80.2 (lower half) is provided between the bellows member 2 and the exhaust gas channel 10 to directly insulate the channel 10. The pockets 84 formed by the bellows member 2 would also add to a temperature insulation, wherein the insulation means 80, 80.2 and the undulations 22 of bellows member define the shape and size of the additional recesses 84, too. Air has at normal conditions a thermal conductivity λ of 0.0261 W/(m*K).

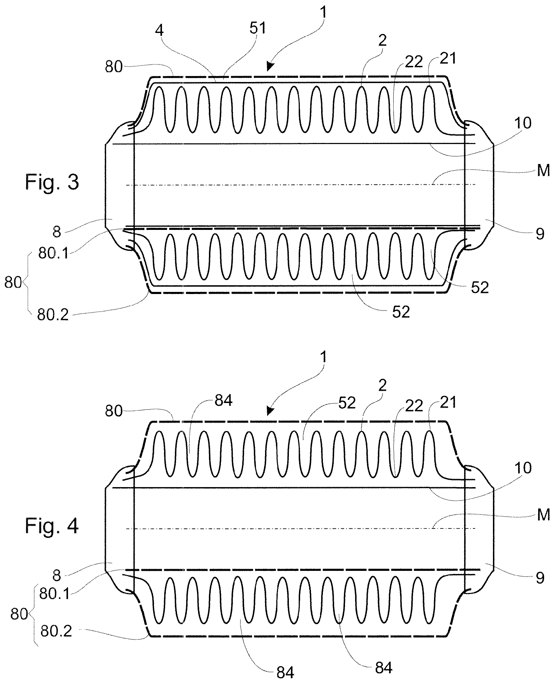

Fig. 3 shows different embodiments of the flexible conduit element 1, wherein the upper half and the lower half, respectively, show a half of an embodiment divided by the middle line M, wherein each of the upper half and the lower half is a half image of the respective part not shown. The insulation means 80, 80.1, 80.2 is provided on the outside of the flexible conduit element surrounding the flexible element 4, and / or between the bellows member 2 and the channel 10.
The upper half of Fig. 3 shows a third embodiment of the flexible conduit element 1. The insulation means 80 of the flexible conduit element is located at the outside of the same such that it is directed to the environment, for example, of the bottom side of a vehicle, like a passenger vehicle. The insulation means 80, thus, covers the outside of the flexible conduit element 2.
The embodiment shown in the upper half of Fig. 3 would provide a nearly complete isolated flexible conduit element 1. This embodiment of the insulation means 80 can be upgraded to already existing flexible conduit elements 2.
The lower half of Fig. 3 shows another embodiment of the flexible conduit element 1, wherein the outer insulation means 80 can be provided with a further inner insulation means 80.1 to enhance the insulation of the flexible conduit element 1. The additional inner insulation means 80.1 can be of the same or of a different braided or woven matrix as the insulation means 80.2 located on the outside of the flexible conduit element 1.
The lower half of Fig. 3 shows half of a fourth embodiment of the flexible element conduit 1, wherein at least a double layer of a first and a second insulation means 80.1 and 80.2 is provided. It is possible to provide several layers (more than two) at predetermined positions. Further, it is also possible to only surround parts of the cylindrical conduit element 1 with the insulation means 80, 80.1, 80.2. For example, only a middle portion, an end portion, or the opening portions of the flexible conduit element 1 are provided with insulation means.
Fig. 4 shows further embodiments of the flexible conduit element 1, wherein the upper half and the lower half, respectively, show a half of an embodiment divided by the middle line M, wherein each of the upper half and the lower half is a half image of the respective part of the embodiment not shown. Some components of the flexible conduit element are replaced by the flexible thermal insulation means 80, 80.1, 80.2, for example, the flexible member 4 and/or the agrafe-type tubing which defines the channel 10.
The insulation means 80, 80.1, 80.2, respectively, replaces parts and components of the flexible conduit element 1. For example, in the upper half of Fig. 1 the flexible member 4 is replaced by the insulation means 80.
The insulation means is a composite mesh 90, wherein parts of the fibers are of basalt and other parts of the fibers are metal. The insulation means 80 in the upper half of Fig. 4 fulfills a double function of insulating and of adjusting the dynamic stiffness of the flexible conduit element 1. Herein, the flexible insulation means 80, 80.1, 80.2 additionally has the function to isolate the flexible conduit element 1, to maintain the overall flexible dynamic and flexibility and to maintain or render the dynamic stiffness of the flexible conduit element over the whole vibration load of the flexible conduit element in an appropriate manner.
The composite mesh 90 is made of fibers of different materials which are braided or woven in each other. Some of the fibers 82 are made of basalt and some of the fibers 82 are made of metal, which are braided or woven to define the insulations means 80, 80.1, 80.2. The insulation means 80, 80.1 and 80.2 can, therefore, function as a layer for changing the dynamic stiffness and the insulation properties of the flexible conduit element.

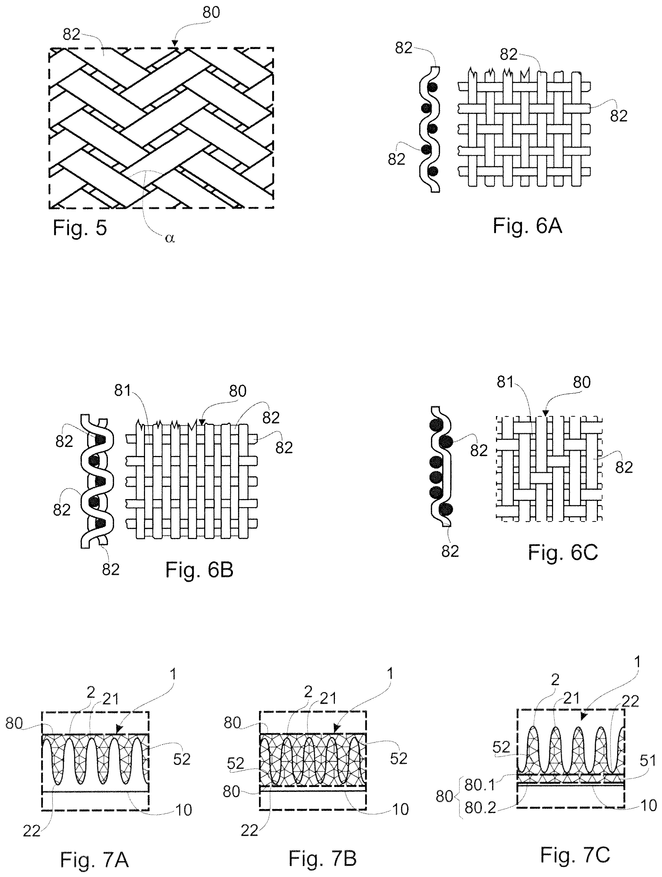

Fig. 5 shows in a schematic plan view a braided matrix of a fiber material, preferably a fiber material of lava stone or basalt, which has a high heat resistance, which fiber material 82 is woven or braided to form recesses 81 in which the surrounding air can be contained. The recesses 81 can contain the surrounding air to increase insulation properties of the insulation means 80. Fig. 5 shows a first embodiment of a braided matrix, wherein the fibers forming insulation means are woven in an oblique manner, wherein the fibers enclose an angle α between 100° and 140°. The oblique braided fibers give the insulation means a dynamic behavior such that it can be extended without disturbing the thermal and / or dynamic movements of the flexible conduit element.
Preferably, the insulation means 80 is made of a matrix or texture which is woven or braided of a fiber of volcanic material, in particular a fiber of basalt. The insulation means 80 can be layer made of woven or braided fiber of volcanic material, forming a cloth or fabric which can be brought into a cylindrical shape for surrounding the generally cylindrical bellows member 2, the channel 10 and / or the flexible element 3.

The manufacturing of basalt-fibers or lava-stone-fibers can be performed as described in the following: About 5 to 10 cm large basalt stones or lava stones are transferred into a furnace. Inside the furnace having temperatures between 1300 ° C and 1450 ° C the basalt-stones are plasticized, i.e. melted and liquefied to a basalt or lava stone melt. The basalt or lava stone melt is then pressed via a flow feeder, for example a heated tube, into a trough with spinnerets. The flow feeder generates a predetermined melting pressure. The melt is then drawn through the spinnerets to generate a continuous fiber or filaments of basalt or lava-stone. The thickness of the fibers can be of that of a human hair depending on the size of the opening of the spinnerets.

For ensuring a better processability, the continuous fiber can be coated with a layer which allows the textile processability and serves as a bonding agent between fibers woven into a predetermined braided or woven matrix. Finally, the fibers are drawn and wound by a winder on a so-called spinning cake to form a roving.

Figs. 6A - 6C show different woven textures of the insulation means 80, 80.1, 80.2, wherein the insulation means 80, 80.1, 80.2 is formed by fibers 82 comprising a volcanic material, like basalt and / or lava-stone. The spaces between the woven basalt and / or lava-stone fibers 82 form and define receiving pockets or recesses 81 for receiving the surrounding air or another insulation material to increase the insulation properties of the insulation means 80.

Figs. 6A - 6C respectively show different textures of woven structures or matrixes which are formed by a lava-stone and / or basalt fiber 82, wherein the left sectional view, respectively, show a schematic section view of the woven matrix shown as a plan view right to the section view.

The section views in Figs. 6A - 6C show, respectively, the schematics as how the respective filaments or fibers 82 can be interlayed to each other to form the respective matrixes shown in the plan view of Figs. 6A - 6C.

It would be also possible to change the fibers 82, which are made of basalt or lava-stone, at predetermined positions with filaments or fibers which are made of another material, for example metal, which is heat resistant. A mix of different materials would lead to a composite insulation means, wherein the respective fibers or bands 82 are woven with fibers preferably of the same size or a different size to form the textures shown in Figs. 6A - 6C.

However, the shown woven or braided matrixes are examples as how the insulation means 80 can be configured. There are multiple other woven or braided texture matrixes which can be also used for the insulation means 80.

Preferably, the insulation means 80 is a panel-like or a hose-like woven or braided structure that can be positioned over the cylindrically shaped bellows member 2 or with the channel 10 defined by the bellows member 2.

Figs. 7A - 7C show in a schematic view the different air pockets which can be defined between the bellows member 2 and the insulation means. For example, when the insulation means covers the undulations located on the outside of the bellows member as insulation means and these undulation form air pockets 52 in which air is contained to increase the insulation behavior and properties of the bellows member. Further, there can be also air layers 25 formed between the insulation means and the other components of the flexible conduit element to further increase the thermal insulation behavior of the flexible conduit element.

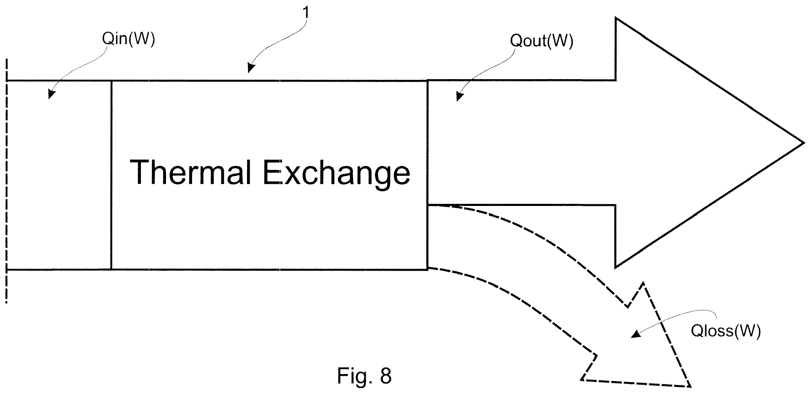

Fig. 8 is a schematic view showing the thermal exchange between the inlet of a flexible conduit element 1 and an outlet of the flexible conduit element 1. An exhaust gas, having a certain amount of heat Q_{In}, exits the inlet if the flexible conduit element with a certain amount of heat Q_{Out}. When flowing through the flexible conduit element 1, the exhaust gas, due to heat exchanges between the components of the flexible conduit element, loses a certain amount of heat Q_{Loss} due to heat conductivity and heat exchange in the uninsulated flexible conduit element 1, such that the exhaust gas will exit the flexible conduit element with a lower amount of heat Qₒᵤₜ. This means when flowing through an uninsulated flexible conduit element, the exhaust gas will lose a certain amount of heat Q_{Loss} = Q_{In} + Q_{Out}.

With the insulation means 80 made of basalt according to the invention, the heat amount loss Q_{Loss} can be at least minimized and at optimal circumstances even clearly prevented such that heat amount of the exhaust gas Q_{In} is nearly equal to Q_{Out}. This has the advantage that the exhaust gas needs not to be reheated for a further purification, for example, in a catalysator. Further, the insulation means 80 made of basalt according to the invention has the advantage that the overall dynamic and static stiffness of the conduit element is not disturbed and the flexible conduit element is not negatively affected by the insulation means according to the invention.

Thus, with the insulation means 80 according to the invention the heat amount Q_{In} of the exhaust gas can be protected, since the insulation means 80 together with the flexible conduit element defines air pockets and air layers which enhance the insulation of the exhaust gas guided in the flexible conduit element.

Further, the insulation means enhances the outer surface of the flexible conduit element 1 by covering the bellows member 2 and reducing the surface over which a heat exchange can occur. This means the insulation means, which surrounds and / or covers the bellows member and/or other components of the generally circular flexible conduit element, reduces the surface over which the heat exchange can occur. If there are several layers of insulation means 80, 80.1, 80.2 such a heat exchange can be nearly completely omitted.

## Claims

1. Flexible conduit element (1) of exhaust gas systems for vehicles having combustion engines, comprising a bellows member (2) defining a guiding channel (10) within the bellows member (2) guiding the exhaust gas of an inlet opening of the channel (10) to an outlet opening thereof, and a thermal insulation means (80),
**characterized in that**
the insulation means (80) is a composite mesh made of fibers (82) made of basalt and fibers (82) made of metal which are braided or woven in each other, and is also a flexible member (4) for protecting and regulating the dynamic stiffness of the flexible conduit element (1) and located on the outside of the bellows member (2).

2. Flexible conduit element (1) according to claim 1, **characterized in that** the fibers (82) made of basalt are drawn out of a melted basalt material.

3. Flexible conduit element (1) according to any of the claims 1 or 2, **characterized in that** the insulation means (80) is flexible relative to and movable attached at the bellows member (2) in a floating manner and / or comprises flexible recesses (81) in its outer surface for improving the flexibility and thermal insulation of the insulation means (80).

4. Flexible conduit element (1) according to any of the claims 1 to 3, **characterized in that** the woven and / or braided matrix is at least partially covered at one side by a fire resistant layer, which covers the recesses (81).

5. Flexible conduit element (1) according to any of the claims 1 to 4, **characterized in that** the insulation means (80) covers a component of the flexible conduit element (1) such that air pockets (52) and / or air layers (51) are defined.

6. Flexible conduit element (1) according to claim 5, **characterized in that,** the basalt material of the insulation means (80) comprises basalt, comprising 45-55 wt% of SiO2, 2-6 wt% of total alkalis, 0.5-2.0 wt% of TiO2, 5-14 wt% of FeO and 14 wt% or more Al₂O₃.

7. Flexible conduit element (1) according to any of the claims 1 to 6 **characterized in that** the outside of the bellows member (2) on which the insulation means (80.2) is located is opposite to the channel (10) for guiding the exhaust gas.

8. Flexible conduit element (1) according to any of the claims 1 to 7, **characterized in that** the insulation means (80.2) is located such that the insulation means (80) is exposed.

9. Flexible conduit element (1) according to any of the preceding claims 1 to 8, **characterized in that** there is at least one or more than one insulation means (80) provided and / or the insulation means (80) comprises multiple layers.

10. Flexible conduit element (1) according to any of the preceding claims 1 to 9, **characterized in that** the insulation means (80) is a layer, a sheet or a hose.

11. Exhaust gas system for a vehicle, the exhaust gas system comprising a flexible conduit element (1) according to any of the claims 1 to 10, wherein the flexible conduit element (1) is mountable between the exhaust gas system and a combustion engine.

## Patentansprüche

1. Flexibles Leitungselement (1) von Abgassystemen für Fahrzeuge mit Verbrennungsmotoren, das einen Balg-Teil (2), der einen Leit-Kanal (10) im Inneren des Balg-Teils (2) aufweist, der das Abgas von einer Einlassöffnung des Kanals (10) zu einer Auslassöffnung desselben leitet, sowie eine Wärme-Isoliereinrichtung (80) umfasst,
**dadurch gekennzeichnet, dass**
die Isoliereinrichtung (80) ein Verbundgeflecht ist, das aus Fasern (82) aus Basalt und Fasern (82) aus Metall besteht, die miteinander verflochten oder verwebt sind, und darüber hinaus ein flexibles Element (4) ist, mit dem das flexible Leitungselement (1) geschützt und seine dynamische Steifigkeit reguliert wird und das sich an der Außenseite des Balg-Teils (2) befindet.

2. Flexibles Leitungselement (1) nach Anspruch 1, **dadurch gekennzeichnet, dass** die Fasern (82) aus Basalt aus einem geschmolzenen Basaltmaterial gezogen werden.

3. Flexibles Leitungselement (1) nach einem der Ansprüche 1 oder 2, **dadurch gekennzeichnet, dass** die Isoliereinrichtung (80) relativ zu dem Balg-Teil (2) flexibel und daran beweglich schwebend angebracht ist und/oder flexible Aussparungen (81) in seiner Außenfläche zum Verbessern der Flexibilität und Wärmeisolierung der Isoliereinrichtung (80) umfasst.

4. Flexibles Leitungselement (1) nach einem der Ansprüche 1 bis 3, **dadurch gekennzeichnet, dass** die gewebte und/oder geflochtene Matrix an einer Seite wenigstens teilweise mit einer feuerfesten Schicht abgedeckt ist, die die Aussparungen (81) abdeckt.

5. Flexibles Leitungselement (1) nach einem der Ansprüche 1 bis 4, **dadurch gekennzeichnet, dass** die Isoliereinrichtung (80) einen Bestandteil des flexiblen Leitungselementes (1) so abdeckt, dass Lufttaschen (52) und/oder Luftschichten (51) ausgebildet sind.

6. Flexibles Leitungselement (1) nach Anspruch 5, **dadurch gekennzeichnet, dass** das Basaltmaterial der Isoliereinrichtung (80) Basalt umfasst, der 45 - 55 Masse-% SiO₂, 2 - 6 Masse-% der gesamten Alkalien, 0,5 - 2,0 Masse-% TiO₂, 5 - 14 Gew.-% FeO sowie 14 Masse-% oder mehr Al₂O₃ umfasst.

7. Flexibles Leitungselement (1) nach einem der Ansprüche 1 bis 6, **dadurch gekennzeichnet, dass** die Außenseite des Balg-Teils (2), an der die Isoliereinrichtung (80.2) angeordnet ist, dem Kanal (10) zum Leiten des Abgases gegenüberliegt.

8. Flexibles Leitungselement (1) nach einem der Ansprüche 1 bis 7, **dadurch gekennzeichnet, dass** die Isoliereinrichtung (80.2) so angeordnet ist, dass die Isoliereinrichtung (80) freiliegt.

9. Flexibles Leitungselement (1) nach einem der vorangehenden Ansprüche 1 bis 8, **dadurch gekennzeichnet, dass** wenigstens eine oder mehr als eine Isoliereinrichtung (80) vorhanden ist/sind und/oder die Isoliereinrichtung (80) mehrere Schichten umfasst.

10. Flexibles Leitungselement (1) nach einem der vorangehenden Ansprüche 1 bis 9, **dadurch gekennzeichnet, dass** die Isoliereinrichtung (80) eine Schicht, eine Folie oder ein Schlauch ist.

11. Abgassystem für ein Fahrzeug, wobei das Abgassystem ein flexibles Leitungselement (1) nach einem der Ansprüche 1 bis 10 umfasst und das flexible Leitungselement (1) zwischen dem Abgassystem und einem Verbrennungsmotor installiert werden kann.

## Revendications

1. Élément de conduit flexible (1) de systèmes de gaz d'échappement pour véhicules ayant des moteurs à combustion, comprenant un élément à soufflets (2) définissant un canal de guidage (10) à l'intérieur de l'élément de soufflets (2) guidant les gaz d'échappement d'une ouverture d'entrée du canal (10) vers une ouverture de sortie de celui-ci, et des moyens d'isolation thermique (80),
**caractérisé en ce que**
les moyens d'isolation (80) sont un treillis composite constitué de fibres (82) constituées de basalte et de fibres (82) constituées de métal qui sont tressées ou tissées les unes avec les autres, et sont également un élément flexible (4) pour protéger et réguler la rigidité dynamique de l'élément de conduit flexible (1) et situé sur l'extérieur de l'élément de soufflets (2).

2. Élément de conduit flexible (1) selon la revendication 1, **caractérisé en ce que** les fibres (82) constituées de basalte sont tirées à partir d'un matériau de basalte fondu.

3. Élément de conduit flexible (1) selon l'une quelconque des revendications 1 ou 2, **caractérisé en ce que** les moyens d'isolation (80) sont flexibles par rapport à l'élément de soufflets (2) et fixé de manière mobile à celui-ci d'une manière flottante et/ou comprend des évidements flexibles (81) dans sa surface extérieure pour améliorer la flexibilité et l'isolation thermique des moyens d'isolation (80).

4. Élément de conduit flexible (1) selon l'une quelconque des revendications 1 à 3, **caractérisé en ce que** la matrice tissée et/ou tressée est au moins partiellement recouverte au niveau d'un côté par une couche résistant au feu, qui recouvre les évidements (81).

5. Élément de conduit flexible (1) selon l'une quelconque des revendications 1 à 4, **caractérisé en ce que** les moyens d'isolation (80) recouvrent un composant de l'élément de conduit flexible (1) de sorte que des poches d'air (52) et/ou des couches d'air (51) sont définies.

6. Élément de conduit flexible (1) selon la revendication 5, **caractérisé en ce que** le matériau de basalte des moyens d'isolation (80) comprend du basalte, comprenant 45 à 55 % en poids de SiO2, 2 à 6 % en poids d'alcalis totaux, 0,5 à 2,0 % en poids de TiO2, 5 à 14 % en poids de FeO et 14 % en poids ou plus d'Al₂O₃.

7. Élément de conduit flexible (1) selon l'une quelconque des revendications 1 à 6 **caractérisé en ce que** l'extérieur de l'élément de soufflets (2) sur lequel sont positionnés les moyens d'isolation (80.2) est situé à l'opposé du canal (10) de guidage des gaz d'échappement.

8. Élément de conduit flexible (1) selon l'une quelconque des revendications 1 à 7, **caractérisé en ce que** les moyens d'isolation (80.2) sont situés de telle sorte que les moyens d'isolation (80) sont exposés.

9. Élément de conduit flexible (1) selon l'une quelconque des revendications précédentes 1 à 8, **caractérisé en ce qu'**au moins un ou plusieurs moyens d'isolation (80) sont prévus et/ou les moyens d'isolation (80) comprennent de multiples couches.

10. Élément de conduit flexible (1) selon l'une quelconque des revendications précédentes 1 à 9, **caractérisé en ce que** les moyens d'isolation (80) sont une couche, une feuille ou un tuyau.

11. Système de gaz d'échappement pour un véhicule, le système de gaz d'échappement comprenant un élément de conduit flexible (1) selon l'une quelconque des revendications 1 à 10, dans lequel l'élément de conduit flexible (1) peut être monté entre le système de gaz d'échappement et un moteur à combustion.
